# EUROPEAN PATENT APPLICATION

(11) **EP 2 884 711 A1**
(43) Date of publication of application: **17.06.2015**
(21) Application number: 12885243.1
(22) Date of filing: 29.09.2012
(51) Int. Cl.: H04L 29/06

(54) **DATA TRANSMISSION METHOD, USER EQUIPMENT, AND NETWORK SIDE DEVICE**

(71) Applicant: Huawei Technologies Co., Ltd., Longgang District Shenzhen, Guangdong 518129 (CN)
(72) Inventor: FU, Miao, Shenzhen Guangdong 518129 (CN); WANG, Yuqin, Shenzhen Guangdong 518129 (CN)
(74) Representative: Pfenning, Meinig & Partner GbR
(86) International application number: PCT/CN2012/082491
(87) International publication number: WO 2014/047942

(57) **Abstract**

The present invention provides a data transmission method, a user equipment, and a network side device. The method includes: generating a concurrency policy, where the concurrency policy is used to indicate a user equipment to select at least one access network from at least two access networks to transmit at least one data stream; and sending the concurrency policy to the user equipment through a first data connection between a first access network in the at least two access networks and the user equipment. In the present invention, the user equipment concurrently transmits data through multiple radio access networks, so as to obtain a higher peak throughput, improve user experience, and adjust load sharing of the user equipment in time.

## Description

### TECHNICAL FIELD

The present invention relates to the field of communications, and in particular, to a data transmission method, a user equipment, and a network side device.

### BACKGROUND

With the rise of various applications of mobile Internet and popularity of intelligent terminals, users' demands for bandwidths of data services see an explosive growth. Meanwhile, wireless broadband access technologies, including wireless fidelity (Wireless Fidelity, WIFI), HSPA (High speed packet access, High Speed Packet Access), WIMAX (Worldwide Interoperability for Microwave Access, Worldwide Interoperability for Microwave Access), and LTE (Long Term Evolution, Long Term Evolution), are also developing rapidly. However, from the perspective of the current state and future development trend of the wireless communication market, if with only one of the foregoing wireless broadband technologies, it is difficult to meet the continuously increasing data bandwidth demands, possibly resulting in network congestion and lowered service quality.

Therefore, a problem how to make a user equipment concurrently transmit a data stream through multiple access networks needs to be solved.

### SUMMARY

Embodiments of the present invention provide a data transmission method, a user equipment, and a network side device, which can concurrently transmit a data stream through multiple access networks.

In a first aspect, a data transmission method is provided and includes: generating a concurrency policy, where the concurrency policy is used to indicate a user equipment to select at least one access network from at least two access networks to transmit at least one data stream; and sending the concurrency policy to the user equipment through a first data connection between a first access network in the at least two access networks and the user equipment.

In a first possible implementation manner, the method further includes: respectively obtaining network state information of the at least two access networks from the at least two access networks, where the network state information includes information used to indicate a resource usage state of the access network, where the generating a concurrency policy includes: generating the concurrency policy according to the network state information of the at least two access networks.

With reference to any one possible implementation manner described in the foregoing, in a second possible implementation manner, the network state information includes: at least one of a network load and a connection state.

With reference to any one possible implementation manner described in the foregoing, in a third possible implementation manner, the at least two access networks include at least one radio access network, and the network state information includes: at least one of a network load, a connection state, and link quality, where the network load is an air interface load.

With reference to any one possible implementation manner described in the foregoing, in a fourth possible implementation manner, the concurrency policy includes load sharing information used to indicate a load sharing proportion of the at least two access networks, so that the user equipment selects, according to the load sharing information, the at least one radio access network to transmit the at least one data stream.

With reference to the fourth possible implementation manner, in a fifth possible implementation manner, the concurrency, policy further includes: mapping information, so that the user equipment selects, according to the load sharing information and the mapping information, the at least one radio access network to transmit the at least one data stream, where the mapping information is used to indicate correspondence between the at least two access networks and different data stream features.

With reference to any one possible implementation manner described in the foregoing, in a sixth possible implementation manner, the concurrency, policy includes: mapping information, so that the user equipment selects, according to the mapping information, the at least one access network corresponding to the at least one data stream to transmit the at least one data stream, where the mapping information is used to indicate correspondence between the at least two access networks and different data stream features.

With reference to the fifth or the sixth possible implementation manner of the first aspect, in a seventh possible implementation manner, the data stream feature includes at least one of a target address, a source address, a target port number, a source port number, and a protocol number.

With reference to any one possible implementation manner described in the foregoing, in an eighth possible implementation manner, identification information of the at least one access network, so that the user equipment selects, according to the identification information, the at least one access network to transmit the at least one data stream.

In a second aspect, a data transmission method is provided and includes: determining, by a network side device, network state information of a radio access network where the network side device is located; sending, by the network side device, the network state information to a master control node, so that the master control node generates a concurrency, policy according to the network state information, where the network state information includes information used to indicate a resource usage state of an access network, and the concurrency policy is used to indicate a user equipment to select at least one access network from at least two access networks to transmit at least one data stream; and transmitting, by the network side device, uplink data and downlink data through a data connection between the network side device and the user equipment.

In a third aspect, a data transmission method is provided and includes: receiving, by a user equipment, a concurrency policy from a network side device through a first data connection between a first access network in at least two access networks and the user equipment, where the concurrency, policy is used to indicate the user equipment to select at least one access network from the at least two access networks to transmit at least one data stream; selecting, by the user equipment, according to the concurrency policy, the at least one access network from the at least two access networks to transmit the at least one data stream; and transmitting, by the user equipment, the at least one data stream through the at least one access network.

In a first possible implementation manner, the concurrency policy is generated according to network state information of the at least two access networks, and the network state information includes information used to indicate a resource usage state of the access network.

With reference to the first possible implementation manner of the third aspect, in a second possible implementation manner, the at least two access networks include at least one radio access network, and the network state information includes: at least one of a network load and a connection state.

With reference to the first possible implementation manner of the third aspect, in a third possible implementation manner, the at least two access networks include at least one radio access network, and the network state information includes: at least one of a network load, a connection state, and link quality, where the network load is an air interface load.

With reference to any one possible implementation manner of the third aspect, in a fourth possible implementation manner, the concurrency policy includes: load sharing information used to indicate a load sharing proportion of the at least two access networks, where the selecting, by the user equipment, according to the concurrency policy, the at least one access network from the at least two access networks to transmit the at least one data stream includes: selecting, by the user equipment, according to the load sharing information, the at least one access network to transmit the at least one data stream.

With reference to the fourth possible implementation manner of the third aspect, in a fifth possible implementation manner, the concurrency policy further includes: mapping information used to indicate correspondence between the at least two access networks and different data stream features, where the selecting, by the user equipment, according to the concurrency policy, the at least one access network from the at least two access networks to transmit the at least one data stream includes: selecting, by the user equipment, according to the load sharing information and the mapping information, the at least one access network to transmit the at least one data stream.

With reference to any one possible implementation manner described in the foregoing, in a sixth possible implementation manner, the concurrency policy includes: mapping information used to indicate correspondence between the at least two access networks and different data stream features, where the selecting, by the user equipment, according to the concurrency, policy, the at least one access network from the at least two access networks to transmit the at least one data stream includes: selecting, by the user equipment, according to the mapping information, the at least one access network to transmit the at least one data stream.

With reference to the fifth or the sixth possible implementation manner of the third aspect, in a seventh possible implementation manner, the data stream feature includes at least one of a target address, a source address, a target port number, a source port number, and a protocol number.

With reference to any one possible implementation manner described in the foregoing, in an eighth possible implementation manner, the concurrency policy includes: identification information of the at least one access network, where the selecting, by the user equipment, according to the concurrency, policy, the at least one access network from the at least two access networks to transmit the at least one data stream includes: selecting, by the user equipment, according to the identification information, the at least one access network to transmit the at least one data stream.

With reference to any one possible implementation manner described in the foregoing, in a ninth possible implementation manner, the method of the second aspect further includes: receiving, by the user equipment, a downlink data stream of the first access network from the first access network through the first data connection of the first access network; and receiving, by the user equipment, a downlink data stream of the at least one access network through a data connection between the at least one access network and the user equipment.

With reference to any one possible implementation manner described in the foregoing, in a tenth possible implementation manner, after the at least one access network is selected to transmit the at least one data stream, at least one data connection with the at least one access network is established in a case that the at least one access network does not establish a data connection with the user equipment.

In a fourth aspect, a network side device is provided and includes: a generation module, configured to generate a concurrency, policy, where the concurrency policy is used to indicate a user equipment to select at least one access network from at least two access networks to transmit at least one data stream; and a first transmission module, configured to send the concurrency policy to the user equipment through a first data connection between a first access network in the at least two access networks and the user equipment.

In a first possible implementation manner, the network side device further includes: at least two second transmission modules, configured to respectively obtain network state information of the at least two access networks from the at least two access networks, where the network state information includes information used to indicate a resource usage state of the access network, where the generation module generates the concurrency policy according to the network state information of the at least two access networks.

With reference to the first possible implementation manner of the fourth aspect, in a second possible implementation manner, the network state information includes: at least one of a network load and a connection state.

With reference to the first possible implementation manner of the fourth aspect, in a third possible implementation manner, the at least two access networks include at least one radio access network, and the network state information includes: at least one of a network load, a connection state, and link quality, where the network load is an air interface load.

With reference to any one possible implementation manner of the fourth aspect, in a fourth possible implementation manner, the concurrency policy includes load sharing information used to indicate a load sharing proportion of the at least two access networks, so that the user equipment selects, according to the load sharing information, the at least one radio access network to transmit the at least one data stream.

With reference to the fourth possible implementation manner of the fourth aspect, in a fifth possible implementation manner, the concurrency policy further includes: mapping information, so that the user equipment selects, according to the load sharing information and the mapping information, the at least one radio access network to transmit the at least one data stream, where the mapping information is used to indicate correspondence between the at least two access networks and different data stream features.

With reference to any one possible implementation manner of the fourth aspect, in a sixth possible implementation manner, the concurrency policy includes: mapping information, so that the user equipment selects, according to the mapping information, the at least one access network corresponding to the at least one data stream to transmit the at least one data stream, where the mapping information is used to indicate correspondence between the at least two access networks and different data stream features.

With reference to the fifth or the sixth possible implementation manner of the fourth aspect, in a seventh possible implementation manner, the data stream feature includes at least one of a target address, a source address, a target port number, a source port number, and a protocol number.

With reference to any one possible implementation manner of the fourth aspect, in an eighth possible implementation manner, the concurrency policy includes: identification information of the at least one access network, so that the user equipment selects, according to the identification information, the at least one access network to transmit the at least one data stream.

With reference to any one possible implementation manner of the fourth aspect, in a ninth possible implementation manner, the network side device is a network side device of the first access network, or the network side device is a network side device of any access network in the at least two access networks, or the network side device is a network side device independent from the at least two access networks.

In a fifth aspect, a network side device is provided and includes: a determination module, configured to determine network state information of a radio access network where the network side device is located; and a transmission module, configured to send the network state information to a master control node, so that the master control node generates a concurrency policy according to the network state information, and transmit uplink data and downlink data through a data connection between the network side device and the user equipment, where the network state information includes information used to indicate a resource usage state of an access network, and the concurrency, policy is used to indicate a user equipment to select at least one access network from at least two access networks to transmit at least one data stream.

In a sixth aspect, a user equipment is provided and includes: a first transmission module, configured to receive a concurrency policy from a network side device through a first data connection between a first access network in at least two access networks and the user equipment, where the concurrency policy is used to indicate the user equipment to select at least one access network from the at least two access networks to transmit at least one data stream; a selecting module, configured to select, according to the concurrency, policy, the at least one access network from the at least two access networks to transmit the at least one data stream; and at least one second transmission module, configured to transmit the at least one data stream through the at least one access network.

In a first possible implementation manner, the concurrency, policy is generated according to network state information of the at least two access networks, and the network state information includes information used to indicate a resource usage state of the access network.

With reference to the first possible implementation manner of the sixth aspect, in a second possible implementation manner, the at least two access networks include at least one radio access network, and the network state information includes: at least one of a network load and a connection state.

With reference to the first possible implementation manner of the sixth aspect, in a third possible implementation manner, the at least two access networks include at least one radio access network, and the network state information includes: at least one of a network load, a connection state, and link quality, where the network load is an air interface load.

With reference to any one possible implementation manner of the sixth aspect, in a fourth possible implementation manner, the concurrency policy includes: load sharing information used to indicate a load sharing proportion of the at least two access networks, where the selecting module selects, according to the load sharing information, the at least one access network to transmit the at least one data stream.

With reference to the fourth possible implementation manner of the sixth aspect, in a fifth possible implementation manner, the concurrency policy further includes: mapping information used to indicate correspondence between the at least two access networks and different data stream features, where the selecting module selects, according to the load sharing information and the mapping information, the at least one access network to transmit the at least one data stream.

With reference to any one possible implementation manner of the sixth aspect, in a sixth possible implementation manner, the concurrency policy includes: mapping information used to indicate correspondence between the at least two access networks and different data stream features, where the selecting module selects, according to the mapping information, the at least one access network to transmit the at least one data stream.

With reference to the fifth or the sixth possible implementation manner of the sixth aspect, in a seventh possible implementation manner, the data stream feature includes at least one of a target address, a source address, a target port number, a source port number, and a protocol number.

With reference to any one possible implementation manner of the sixth aspect, in an eighth possible implementation manner, the concurrency policy includes: identification information of the at least one access network, where the selecting module selects, according to the identification information, the at least one access network to transmit the at least one data stream.

With reference to any one possible implementation manner of the sixth aspect, in a ninth possible implementation manner, the user equipment further includes: the first transmission module, configured to receive a downlink data stream of the first access network from the first access network through the first data connection of the first access network; and the at least one second transmission module, configured to receive a downlink data stream of the at least one access network through a data connection between the at least one access network and the user equipment.

With reference to any one possible implementation manner of the sixth aspect, in a tenth possible implementation manner, the at least one second transmission module is configured to: after the at least one access network is selected to transmit the at least one data stream, respectively establish at least one data connection with the at least one access network in a case that the at least one access network does not establish a data connection with the user equipment.

In the method and device of the embodiments of the present invention, the user equipment may select, according to the concurrency policy generated by the network side, an appropriate access network from multiple access networks to concurrently transmit the data stream, so as to obtain a higher peak throughput, and improve user experience.

### BRIEF DESCRIPTION OF DRAWINGS

To describe the technical solutions in the embodiments of the present invention more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic flowchart of a data transmission method according to an embodiment of the present invention;
FIG. 2 is a schematic flowchart of a data transmission method according to another embodiment of the present invention;
FIG. 3 is a schematic flowchart of a data transmission method according to another embodiment of the present invention;
FIG. 4A is a schematic structural diagram of a communication system according to an embodiment of the present invention;
FIG. 4B is a schematic architecture diagram of a communication system according to another embodiment of the present invention;
FIG. 4C is a schematic architecture diagram of a communication system according to yet another embodiment of the present invention;
FIG. 4D is a schematic flowchart of a data transmission process according to an embodiment of the present invention;
FIG. 5 is a schematic flowchart of a data transmission process according to another embodiment of the present invention;
FIG. 6 is a schematic flowchart of a data transmission process according to yet another embodiment of the present invention;
FIG. 7 is a schematic structural diagram of a network side device according to an embodiment of the present invention;
FIG. 8 is a schematic structural diagram of a network side device according to another embodiment of the present invention;
FIG. 9 is a schematic structural diagram of a user equipment according to an embodiment of the present invention;
FIG. 10 is a schematic structural diagram of a network side device according to another embodiment of the present invention;
FIG. 11 is a schematic structural diagram of a network side device according to yet another embodiment of the present invention; and
FIG. 12 is a schematic structural diagram of a user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the present invention may be applied to various communication systems, for example, a GSM (Global System of Mobile communication, Global System of Mobile Communication) system, a CDMA (Code Division Multiple Access, Code Division Multiple Access) system, a WCDMA (Wideband Code Division Multiple Access, Wideband Code Division Multiple Access) system, a GPRS (General Packet Radio Service, General Packet Radio Service), an LTE system, an LTE-A (Advanced long term evolution, Advanced Long Term Evolution) system, and a UMTS (Universal Mobile Telecommunication System, Universal Mobile Telecommunication System).

Embodiments of the present invention may be used in wireless networks of different standards. A radio access network may include different network elements in different systems. For example, in LTE and LTE-A, the network element of the radio access network includes an eNB (eNodeB, evolved base station), in WCDMA, the network elements of the radio access network include an RNC (Radio Network Controller, radio network controller) and a Node B, and in GSM, the network element of the radio access network includes a BSC (Base Station Controller). Similarly, other wireless networks, such as WiMax and WiFi, may also use the solutions similar to the embodiments of the present invention, but only that relevant modules in the base station system may be different.

It should also be understood that, in the embodiments of the present invention, a user equipment (UE, User Equipment) includes, but is not limited to, a mobile station (MS, Mobile Station), a mobile terminal (Mobile Terminal), a mobile telephone (Mobile Telephone), a handset (handset), and a portable equipment (portable equipment), the user equipment may communicate with one or more core networks through a radio access network (RAN, Radio Access Network), for example, the user equipment may be a mobile telephone (or called "cellular" telephone) or a computer having a wireless communication function, and the user equipment may further be a portable, pocket, hand-held, computer built-in, or on-board mobile device.

The access network mentioned in the embodiments of the present invention may be a radio access network, for example, UTRAN (Universal Terrestrial Radio Access Network, Universal Terrestrial Radio Access Network), E-UTRAN (Evolved UTRAN, Evolved Universal Terrestrial Radio Access Network), GERAN (GSM EDGE Radio Access Network, GSM EDGE Radio Access Network), HSPA, WiMax, or WLAN, for example, WiFi, which is not limited in the embodiments of the present invention, and the access network may also be an access network of a wired communication network.

In addition, the terms "system" and "network" in the specification may usually be used interchangeably. The term "and/or" in the specification describes only an association between objects, and indicates that three relationships may exist, for example, A and/or B may indicate that the following three cases: A exists separately, both A and B exist, and B exists separately. In addition, the symbol "/" in the specification, generally indicates that associated objects are in an "or" relationship.

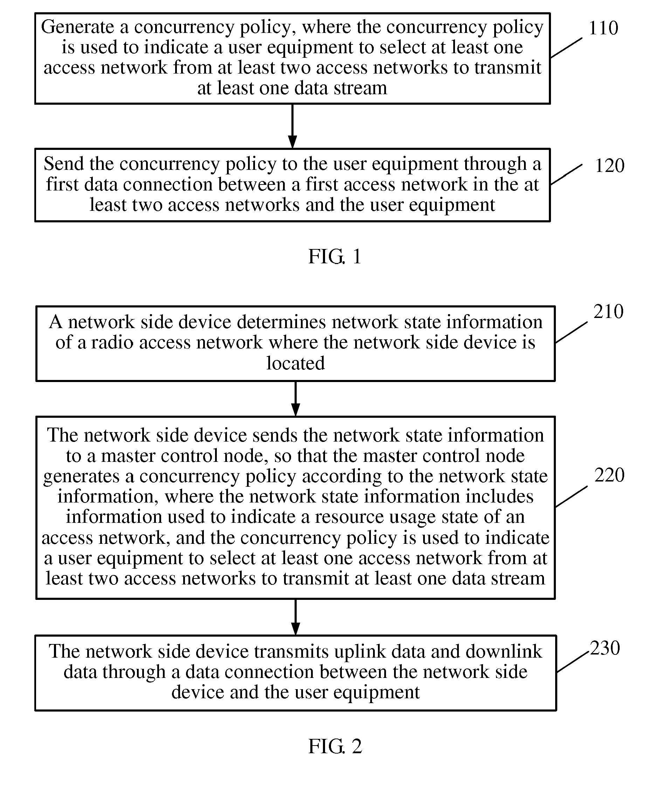

FIG. 1 is a schematic flowchart of a data transmission method according to an embodiment of the present invention. The embodiment of FIG. 1 may be executed by a network side device.

110: Generate a concurrency policy, where the concurrency policy is used to indicate a user equipment to select at least one access network from at least two access networks to transmit at least one data stream.

The at least two access networks may include access networks of different standards, and may also include access networks of a same standard, which is not limited in the embodiment of the present invention. It should be noted that the standard herein may be an access standard or protocol of a radio access network, and may also be an access standard or protocol of a wired access network. For example, the access networks of different standards may include radio access networks, for example, E-UTRAN, UTRAN, GERAN, WiMax, and WLAN, and may also include wired access networks having a routing function.

The network side device executing the method of the present invention may act as a master control device for concurrent data transmission, that is, a master control node of the concurrent data transmission is disposed on the network side device. The network side device may be a network side device of any access network in the at least two access networks, and may also be an independent network side device. For example, when the network side device is located on an UTRAN in the WCDMA technology, the network side device may be an RNC. Optionally, when the network side device is located on an E-UTRAN in the LTE technology, the network side device may be an eNodeB. The embodiment of the present invention is not limited thereto, and the network side device may be a device having a control function in an access network of another standard.

The user equipment may be a user equipment capable of transmitting data through multiple access networks.

The data stream of the embodiment of the present invention may be a PS (Packet Switch, packet switch) domain data stream, and a data connection may refer to an IP (Internet Protocol, internet protocol) connection. In the embodiment of the present invention, the user equipment may distribute, according to the concurrency policy, different data streams to data connections of different access networks for transmission. For example, the user equipment may distribute, according to the concurrency, policy, a video data stream of instant communication to the WLAN for transmission, and distribute a text data stream of instant communication to the UTRAN for transmission. Optionally, the user equipment may further distribute a part of the video data stream to the WLAN for transmission, and distribute the other part of the video data stream to the UTRAN for transmission.

120: Send the concurrency, policy to the user equipment through a first data connection between a first access network in the at least two access networks and the user equipment.

For example, to transmit the data stream, the user equipment may establish the first data connection with the first access network. The network side device may send the concurrency policy to the user equipment through the first data connection of the user equipment, so that the user equipment selects, according to the concurrency policy, at least one data connection of the at least one access network in the at least two access networks to transmit the at least one data stream. In a case that the network side device is independent from the first access network, the concurrency policy needs to be sent to the user equipment through the network side device of the first access network.

For example, based on a data transmission protocol, such as a UDP and a TCP/IP, the concurrency, policy is encapsulated into a data packet and sent to the user equipment over the first data connection, so that standard signaling is prevented from being changed. The embodiment of the present invention is not limited thereto, for example, the concurrency policy may also be carried in existing signaling.

For example, it is assumed that a user uses a browser on the user equipment to browse a web page, but text information and video on the web page browsed by the browser are from different servers. When browsing the web page, the user equipment may firstly establish, through the RNC of the UTRAN, a first data connection used for browsing the web page, so as to transmit a first data stream of the web page, for example, a data stream of text information. The RNC may generate, according to network state information of each access network (for example, radio state information of the radio access network) or according to a requirement, a concurrency policy, and send the concurrency, policy to the user equipment through the first data connection. The user equipment selects, according to the received concurrency policy, an access network conforming to the concurrency, policy to transmit another data stream, for example, the user opens a video on the web page while browsing text information on the web page, and the user equipment selects, according to the concurrency, policy, to transmit the video data stream on the WLAN, so as to implement concurrent transmission of the text information data stream and the video data stream.

As a network state of each access network changes, the RNC may receive new network state information from each access network, and update the concurrency policy according to the new state information. The RNC may send a new concurrency policy to the user equipment. The user equipment selects, according to the new concurrency policy, an appropriate data connection for a newly added data stream. According to the embodiment of the present invention, the user equipment may select, according to the concurrency policy, to establish a new data connection for the newly added data stream, and carry the newly added data stream on the new data connection, and may also select to carry the newly added data stream on the established data connection.

According to the embodiment of the present invention, the user equipment may select, according to the concurrency policy generated by the network side, an appropriate access network from multiple access networks to concurrently transmit the data, so as to obtain a higher peak throughput, and improve user experience. In addition, in the embodiment of the present invention, a core network does not need to be reconstructed, so as to lower a reconstruction cost.

Optionally, as another embodiment, the method of FIG. 1 further includes: respectively obtaining network state information of the at least two access networks from the at least two access networks, where the network state information includes information used to indicate a resource usage state of the access network, where the generating a concurrency policy includes: generating the concurrency policy according to the network state information of the at least two access networks. In the embodiment of the present invention, the user equipment may select an appropriate access network in time according to the network state information, so as to adjust load sharing of the user equipment in time.

According to the embodiment of the present invention, the network state information includes: at least one of a network load and a connection state. For example, the network load may be reflected through a proportion of occupied network resource (for example, a bandwidth or time frequency resource) or a difference between the network resource and an upper limit value of the network resource, and the connection state may be refer to connection and disconnection of the data connection.

Optionally, as another embodiment, the at least two access networks include at least one radio access network, and the network state information includes: at least one of a network load, a connection state, and link quality, where the network load is an air interface load. The link quality refers to channel quality of a data transmission link, for example, may be represented by a CQI (Channel Quality Indicator, channel quality indicator).

In a case that the network side device is located in a radio access network, the network side device may obtain radio state information of the radio access network from the network side device, and obtain radio state information of another radio access network from a network side device of another radio access network. For example, the network side device of each radio access network may obtain the link quality from the user equipment, obtain the air interface load and the connection state through uplink measurement, and report the link quality, the air interface load, and the connection state to the network side device as the radio state information. Optionally, the connection state may also be reported to the network side device by the user equipment through the first data connection.

It should be understood that in the embodiment of the present invention, the master control node may be disposed only on the network side device in the first access network, and in this way, the user equipment needs to first access the access network where the master control node is located, so as to perform control on concurrent transmission. Optionally, the master control node may also be disposed on network side devices of multiple access networks, and in this way, concurrent transmission may be controlled, as long as the user equipment first accesses an access network disposed with a master control node. In this case, the network side device disposed with the master control node needs to send the network state information of the access network to a second network side device disposed with another master control node, so that when the user equipment first performs access through a second access network, the second network side device controls concurrent transmission, that is, the second network side device generates a concurrency policy, and sends the concurrency policy to the user equipment.

In a case that the network side device is independent from the at least two access networks, the network side device may receive, through a communication interface or a communication network, the network state information reported by the network side devices of the at least two access networks.

According to the embodiment of the present invention, the concurrency, policy includes: load sharing information used to indicate a load sharing proportion of multiple access networks, so that the user equipment selects, according to the load sharing information, the at least one radio access network to transmit the at least one data stream.

The concurrency policy may be load sharing information of different access networks. According to the embodiment of the present invention, the concurrency policy may be determined according to the air interface load, the connection state, and the link quality by adopting a distribution algorithm. For example, a greater air interface load of the radio access network causes a lower link quality of the user equipment in the radio access network, a smaller load proportion that the radio access network may share, and then a smaller proportion of data streams subsequently distributed to the access network. On the contrary, a smaller air interface load of the radio access network causes a higher link quality of the user equipment in the radio access network, a greater load proportion that the radio access network may share, and then a greater proportion of data streams subsequently distributed to the access network. In addition, if the connection between the user equipment and the radio access network is in a connected state, the concurrency policy indicates that the radio access network is used for load sharing, and if the connection between the user equipment and the radio access network is in a disconnected state (for example, a fault state), the concurrency policy indicates that the radio access network is not used for load sharing, that is to say, a subsequent data stream is not distributed to the access network.

The concurrency, policy may be a ratio of the number of data streams shared between the multiple radio access networks, for example, the ratio of the number of data streams shared by the UTRAN, the E-UTRAN, and the WLAN is 1:2:3. The embodiment of the present invention is not limited thereto, for example, the concurrency, policy may be a ratio of traffic of the data streams that may be shared by the multiple radio access networks.

Optionally, as another embodiment, the concurrency policy further includes: mapping information, so that the user equipment selects, according to the load sharing information and the mapping information, the at least one radio access network to transmit the at least one data stream, where the mapping information is used to indicate correspondence between the at least two access networks and different data stream features.

According to the embodiment of the present invention, the data stream feature includes at least one of a target address, a source address, a target port number, a source port number, and a protocol number.

The mapping information may be information indicating correspondence between a feature of a specific data stream and a preferred access network. The data stream feature may represent different data stream types, in the embodiment of the present invention, at least one element in a quintuple (a target address, a source address, a target port number, a source port number, and a protocol number) may be used as a feature for differentiating different data streams, for example, the video data stream and the text data stream may adopt different port numbers, and the video data stream of instant communication and the video data stream on the web page may adopt different protocol numbers, to which the embodiment of the present invention is not limited, for example, a combination of the at least one element may also be used to differentiate different data streams.

According to the embodiment of the present invention, the user equipment may select, with reference to the load sharing information and the mapping information, a radio access network to transmit a new data stream. For example, for a data stream with a preferred access network, the preferred access network of the data stream is directly selected; and for a data stream without a preferred access network, each access network is selected, according to a distribution proportion provided by the concurrency policy, for transmission, For example, operators may set preferred access networks corresponding to different data streams on the network side device, for example, it may be set that a text data stream of instant communication preferably uses the E-UTRAN access network, and that a video data stream corresponding to a web page browser preferably uses the WLAN access network. Optionally, it may be set that a text data stream of instant communication preferably uses the E-UTRAN access network, and that a video data stream of an instant communication application preferably uses the WLAN access network. Optionally, it may be set that a part of the video data stream preferably uses the E-UTRAN access network, and set that another part of the video data stream preferably uses the WLAN access network. In the embodiment of the present invention, the appropriate network connection may be selected according to the data stream feature, so as to improve the user experience, and share the network load.

Optionally, as another embodiment, the concurrency policy includes: mapping information, so that the user equipment selects, according to the mapping information, the at least one access network corresponding to the at least one data stream to transmit the at least one data stream, where the mapping information is used to indicate correspondence between the at least two access networks and different data stream features. For example, the text data stream of the instant communication application may be transmitted by using the E-UTRAN, and the video data stream may be transmitted by using the WLAN.

Optionally, as another embodiment, the concurrency, policy includes: identification information of the at least one access network, so that the user equipment selects, according to the identification information, the at least one access network to transmit the at least one data stream.

For example, the network side device may select, according to the current network state information, an access network for the newly added data stream, and send the identification information of the selected access network to the user equipment as the concurrency policy. Optionally, the access network may also be specified for the newly added data stream by an operator according to a requirement through the network side device, and an identifier of the specified access network is sent to the user equipment.

Optionally, as another embodiment, the method of FIG. 1 further includes: when receiving a downlink data stream, the network side devices of the at least two access networks transmit the downlink data stream to the user equipment through the data connections of the at least two radio access networks.

According to the embodiment of the present invention, the downlink data stream corresponding to the uplink data stream may be transmitted through the first data connection that is established when the uplink data stream is transmitted. For example, if the user equipment establishes the first data connection with the network side device when the user opens the web page browser, the network side device may send the text information to the user equipment through the first data connection when the network side device receives the text information on the web page. If the user equipment establishes the second data connection with the second network side device when opening the video on the web page, the second network side device transmits the downlink data on the second data connection when the second network side device receives the downlink data related to the video.

According to the embodiment of the present invention, the network side device executing the method of FIG. 1 may include a base station, a base station controller (BSC), or a RNC, or an independent device having a control function.

For example, the network side device may be an eNodeB in the E-UTRAN, or a BSC in the GERAN, or an RNC in the UTRAN.

FIG. 2 is a schematic flowchart of a data transmission method according to another embodiment of the present invention. The embodiment of FIG. 2 is corresponding to the embodiment of FIG. 1, and detailed description is properly omitted herein.

210: A network side device determines network state information of a radio access network where the network side device is located.

220: The network side device sends the network state information to a master control node, so that the master control node generates a concurrency policy according to the network state information, where the network state information includes information used to indicate a resource usage state of an access network, and the concurrency policy is used to indicate a user equipment to select at least one access network from at least two access networks to transmit at least one data stream.

230: The network side device transmits uplink data and downlink data through a data connection between the network side device and the user equipment.

According to the embodiment of the present invention, the user equipment may select, according to the concurrency policy generated by the network side, an appropriate access network from multiple access networks to concurrently transmit the data, so as to obtain a higher peak throughput, and improve user experience. In the embodiment of the present invention, the appropriate access network may be selected in time according to the network state information, so as to adjust load sharing of the user equipment in time. In addition, in the embodiment of the present invention, a core network does not need to be reconstructed, so as to lower a reconstruction cost.

In the foregoing, the data transmission method provided by the embodiment of the present invention is described from the perspective of the network side device. In the following, the data transmission method provided by the embodiment of the present invention is described in detail from the perspective of the user equipment.

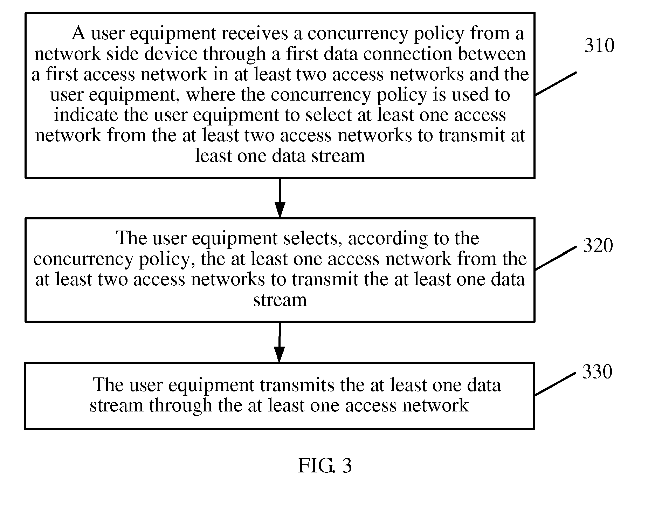

FIG. 3 is a schematic flowchart of a data transmission method according to another embodiment of the present invention. The embodiment of FIG. 3 is corresponding to the embodiment of FIG. 1, and detailed description is properly omitted herein.

310: A user equipment receives a concurrency, policy from a network side device through a first data connection between a first access network in at least two access networks and the user equipment, where the concurrency policy is used to indicate the user equipment to select at least one access network from the at least two access networks to transmit at least one data stream.

320: The user equipment selects, according to the concurrency policy, the at least one access network from the at least two access networks to transmit the at least one data stream.

330: The user equipment transmits the at least one data stream through the at least one access network.

According to the embodiment of the present invention, the user equipment may select, according to the concurrency policy generated by the network side, an appropriate access network from multiple access networks to concurrently transmit the data, so as to obtain a higher peak throughput, and improve user experience. In addition, in the embodiment of the present invention, a core network does not need to be reconstructed, so as to lower a reconstruction cost.

According to the embodiment of the present invention, the concurrency policy is generated according to network state information of the at least two access networks, and the network state information includes information used to indicate a resource usage state of the access network.

According to the embodiment of the present invention, the network state information includes: at least one of a network load and a connection state.

Optionally, as another embodiment, the at least two access networks include at least one radio access network, and the network state information includes: at least one of a network load, a connection state, and link quality, where the network load is an air interface load.

According to the embodiment of the present invention, the concurrency, policy includes: load sharing information used to indicate a load sharing proportion of the at least two access networks, where in 320, the user equipment selects, according to the load sharing information, the at least one access network to transmit the at least one data stream.

Optionally, as another embodiment, the concurrency policy further includes: mapping information used to indicate correspondence between the at least two access networks and different data stream features, where in 320, the user equipment selects, according to the load sharing information and the mapping information, the at least one access network to transmit the at least one data stream.

According to the embodiment of the present invention, the concurrency, policy includes: mapping information used to indicate correspondence between the at least two access networks and different data stream features, where in 320, the user equipment selects, according to the mapping information, the at least one access network to transmit the at least one data stream.

According to the embodiment of the present invention, according to the embodiment of the present invention, the data stream feature includes at least one of a target address, a source address, a target port number, a source port number, and a protocol number.

According to the embodiment of the present invention, the concurrency policy includes: identification information of the at least one access network, where in 320, the user equipment selects, according to the identification information, the at least one access network to transmit the at least one data stream.

Optionally, as another embodiment, the method of FIG. 3 further includes: receiving, by the user equipment, a downlink data stream of the first access network from the first access network through the first data connection of the first access network; and receiving, by the user equipment, a downlink data stream of the at least one access network through a data connection between the at least one access network and the user equipment.

Optionally, as another embodiment, the method of FIG. 3 further includes: after selecting the at least one access network to transmit the at least one data stream, establishing at least one data connection with the at least one access network in a case that the at least one access network does not establish a data connection with the user equipment.

In the following, the embodiments of the present invention are described in more details in combination with specific examples.

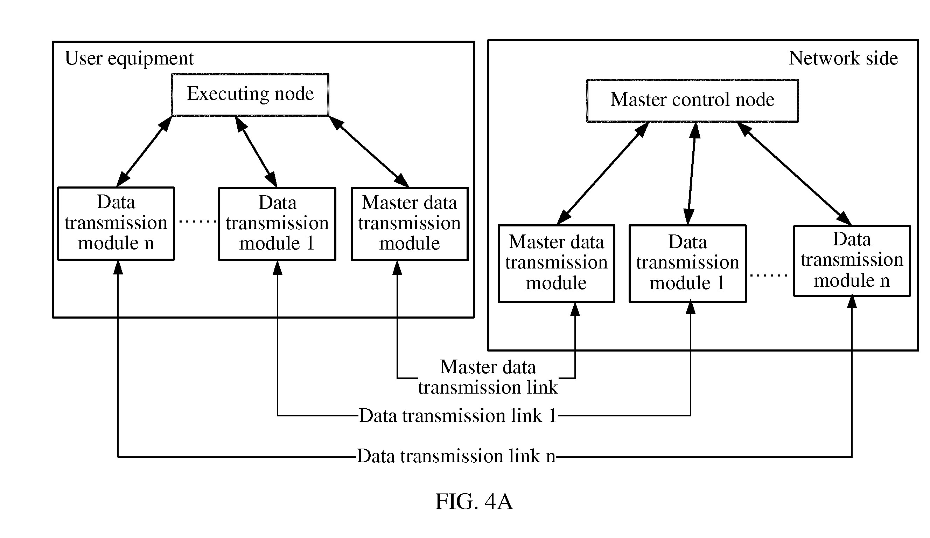

FIG. 4A is a schematic structural diagram of a communication system according to an embodiment of the present invention. In this embodiment, that an access network is a radio access network is taken as an example for description.

The communication system in the embodiment of the present invention has multiple radio access networks (or systems) of different types on a network side, for example, an UTRAN (Universal Terrestrial Radio Access Network, universal terrestrial radio access network), an E-UTRAN (Evolved UTRAN, evolved universal terrestrial radio access network), a GERAN (GSM EDGE Radio Access Network, GSM EDGE radio access network), an HSPA, a WiMax, and a WLAN, for example, WiFi. In other words, the communication system according to the embodiment of the present invention may use multiple radio access networks of different standards to provide different radio access capabilities for the user equipment.

In order to implement concurrent operation of multiple radio access networks, that is, multiple radio access networks of different types concurrently transmit the data for a same user equipment. According to the embodiment of the present invention, a control module configured to control the concurrent transmission is newly added on the network side, and the control module may act as a master control node of the concurrent transmission. The master control node may be implemented by a server (server), and the network side device where the master control node is located is a master network side device. The master control node mainly manages concurrent data connections of all user equipments under the radio access network where the master control node is located, for example, generation and delivery of the concurrency policy. The master network side device may be a network side device of the radio access network. Optionally, the master network side device may also be a network side device independent from the radio access network. The master network side device has a communication interface with the network side device of each radio access network, or the master network side device may communicate with the network side device of each radio access network through a communication network.

Further, according to the embodiment of the present invention, an executing node used for distributing the concurrently transmitted data may be added on the user equipment side, and the executing node may be implemented by a client (client). The executing node mainly manages the concurrent data connections according to indication of the master control node, for example, reports a connection state and link quality, and controls connection and disconnection of the data connection.

According to the embodiment of the present invention, data transmission modules are disposed on the network side devices of different radio access networks, for example, a master data transmission module on the master network side device, and a data transmission module 1 to a data transmission module n on a network side device 1 to a network side device n. On the user equipment side, different data transmission modules are disposed for different radio access networks, for example, the master data transmission module, and the data transmission module 1 to the data transmission module n. During data transmission, the master data transmission module on the master network side device establishes a master data transmission link (or data connection) with the master data transmission module on the user equipment, the data transmission module 1 to the data transmission module n on the user equipment respectively establish a data transmission link 1 to a data transmission link n with the data transmission module 1 to the data transmission module n on the network side devices. According to a type of radio access network, the data transmission modules may be divided into non-cellular data transmission modules (for example, a data transmission module of WiFi) and cellular data transmission modules (for example, a data transmission module of GERAN, UTRAN, and E-UTRAN).

According to the embodiment of the present invention, the user equipment supports that data connections (or links) of multiple standards exist at the same time, and can properly perform data sharing between the data connections of multiple standards, so as to implement concurrency. Specifically, according to the concurrency policy provided by the network side, the executing node in the user equipment selects an appropriate network connection for an uplink data stream, so as to ensure that the uplink data stream is shared by an data transmission module satisfying the concurrency, policy.

According to the embodiment of the present invention, the radio state information may be saved in the network side in a form of context information. The master control node may establish context information for each user equipment accessing the network through a different radio access network, for example, may establish the context information when the network side establishes a data connection for the user. Each user equipment has independent context information, mainly including: radio state information of a radio access network, for example, the state and link quality of each data connection of the user equipment, and a real-time load of the radio access network where the user equipment is located, and the information is mainly used to generate the concurrency policy, and control the user equipment to perform reasonable concurrency.

Referring to FIG. 4A, the data transmission module 1 of the network side device 1 to the data transmission module n of the network side device n of other radio access networks report the radio state information of the radio access networks, for example, information such as the air interface load, the link quality, and the connection state, to the master control node through the respective data transmission modules, where the air interface load is obtained by each network side device through uplink measurement, and the link quality, the connection state, and other information are obtained by the user equipment through downlink measurement, and reported to the network side device.

As the radio state of each radio access network changes, the master control node may adjust, according to the radio state information reported by the network side device of each radio access network in real time, the concurrency, policy for each user equipment, for example, adjust a load sharing proportion between different radio access networks and preferred radio access networks (or preferred network connections) corresponding to different application programs, and may notify each user equipment, which accesses the radio access network where the master control node is located, of the new concurrency policy through the master data transmission module.

In addition, according to the embodiment of the present invention, based on a principle of "where data comes, then where data goes", the downlink concurrency is indirectly implemented when the uplink concurrency is implemented, thereby achieving the objective of bi-directional concurrency. In other words, while the concurrent transmission of the uplink data is implemented on the user equipment, the network side device may implement the concurrent transmission of the downlink data on the data connection that is established during the concurrent transmission of the uplink data.

According to the embodiment of the present invention, in a scenario of heterogeneous network convergence, the user equipment may transmit the data through multiple access networks, so as to not only obtain a higher peak throughput, but also distribute, according to an actual requirement and characteristics, different data streams to different data transmission devices, thereby improving user experience, balancing a network load, and improving network efficiency. In addition, two communication parties establish the data connections of multiple standards according to negotiation, so as to intelligently share the data load, and utilize the existing hardware and spectrum resources to the maximum extent, thereby effectively improving a data transmission throughput and a resource utilization rate, and improving the user experience.

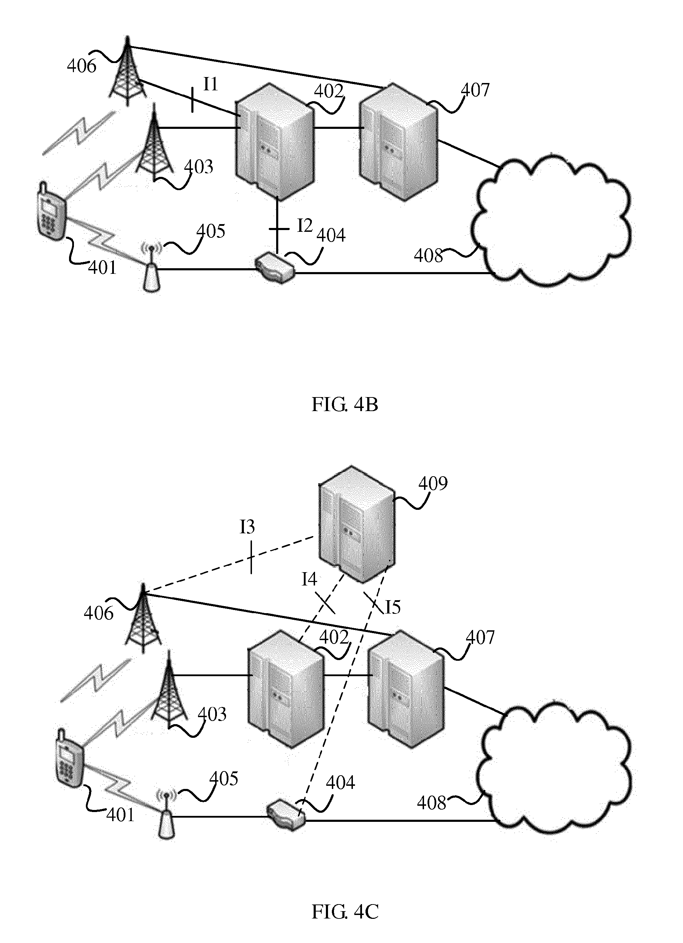

FIG. 4B is a schematic architecture diagram of a communication system according to another embodiment of the present invention. In FIG. 4B, that a radio access network includes a WLAN, an UTRAN, and an E-UTRAN is taken as an example for describing the communication system according to the embodiment of the present invention.

A user equipment 401 may support the foregoing three standards, that is, may access a network through an eNodeB 406, or access the network through a NodeB 403, or access the network through a WiFi AP. The eNodeB 406 is connected to the Internet (Internet) 408 through a core network 407. The NodeB 403 is connected to the core network 407 through a radio network controller 402, and is connected to the Internet through the core network 407. A WiFi AP (Access Point, access point) is connected to the Internet 408 through an AC/BRAS (Access Controller/Broadband Remote Access Server, broadband remote access server) 404.

That the radio network controller 402 acts as a master control node of concurrent operation is taken as an example. The eNodeB 406 sends, through an interface I1 between the eNodeB 406 and the radio network controller 402, radio state information of the E-UTRAN to the master control node on the radio network controller 402, the AC/BRAS sends, through an interface I1 between the AC/BRAS 404 and the radio network controller 402, radio state information of the WLAN to the master control node on the radio network controller 402, and the master control node on the radio network controller 402 also receives radio state information of UTRAN reported by the radio network controller 402. The embodiment of the present invention is not limited thereto, the radio state information of the WLAN and the E-UTRAN may also be sent to the radio network controller 402 through another network, for example, the radio state information may be sent to the radio network controller 402 based on a UDP or TCP/IP protocol through the Internet 408 or through a management network.

The radio network controller 402 may generate a concurrency, policy according to the radio state information, and send the concurrency policy to the user equipment 401 through a data connection between the user equipment 401 and the UTRAN.

It should be understood that when a network side device of another radio access network, for example, an eNodeB 406, acts as the master control node of the concurrent operation, the radio network controller 402 and the AC/BRAS 404 need to respectively send radio state information of the radio access network where the network side device is respectively located to the eNodeB 406, and the eNodeB 406 generates the concurrency policy according to the radio state information, and sends the concurrency policy to the user equipment 401 through a data connection between the user equipment 401 and the E-UTRAN.

FIG. 4C is a schematic architecture diagram of a communication system according to yet another embodiment of the present invention. In FIG. 4C, that a radio access network includes a WLAN, an UTRAN, and an E-UTRAN is taken as an example for describing the communication system according to the embodiment of the present invention. Different from the embodiment of FIG. 4B, a master control node for concurrent transmission is located on a network side device independent from the radio access network.

Referring to FIG. 4C, in a case that the network side device where the master control node is located is independent from the radio access network, there is a communication interface between the network side device where the master control node is located and a network side device of each radio access network or communication may be performed through a communication network. For example, there is a communication interface I3, used for transmitting radio state information of the E-UTRAN, between an eNodeB 406 and the master control node, there is a communication interface I4, used for transmitting radio state information of the UTRAN, between an RNC 402 and the master control node, and there is a communication interface I5, used for transmitting radio state information of the WLAN, between an AC/BRAS and the master control node.

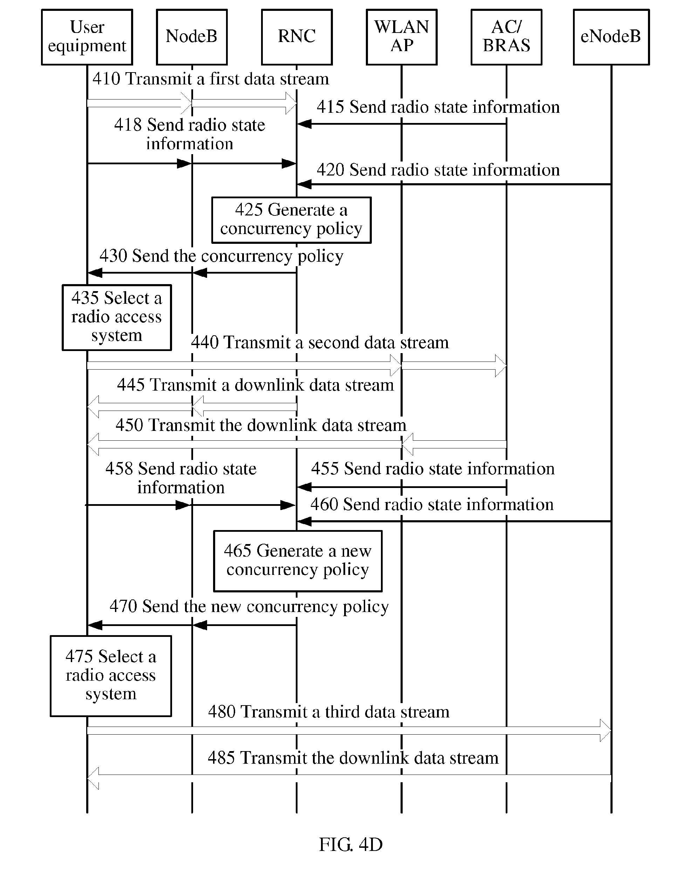

FIG. 4D is a schematic flowchart of a data transmission process according to an embodiment of the present invention. The embodiment of FIG. 4D describes an example of concurrently transmitting data based on a radio state. In this embodiment, an RNC of an UTRAN is disposed with a master control node for concurrent transmission.

410: A user equipment transmits a first data stream through a master data transmission module.

The user equipment may first use the master data transmission module to establish a first data connection (that is, a master data transmit connection) with a master data transmission module of the RNC through a certain application program (for example, an instant communication application program), and transmits the first data stream on the first data connection.

415: An AC/BRAS sends radio state information of a WLAN to the RNC.

The AC/BRAS may report load state information (for example, an air interface load) of the WLAN to the master control node in the RNC through a data transmission module.

418: The user equipment sends radio state information to the RNC.

The user equipment may report link quality of the UTRAN to the RNC through a normal feedback mechanism. The user equipment further reports a connection state of the WLAN to the master control node in the RNC by carrying the connection state of the WLAN in coordination signaling. Optionally, in a case that an AP, an AC, and a BRAS can correctly sense a connection state of the user equipment, the AC/BRAS may also send the radio state information of the WLAN to the RNC. The master control node may receive the link quality, the air interface load, and the connection state of the UTRAN reported by the RNC.

420: An eNodeB sends radio state information of an E-UTRAN to the RNC.

The eNodeB may report load state information (for example, an air interface load), a connection state, and link quality of the E-UTRAN to the master control node in the RNC through a data transmission module of the eNodeB.

425: The RNC generates a concurrency policy according to the radio state information.

The master control node in the RNC may generate the concurrency policy according to the radio state information of the WLAN, the radio state information of the E-UTRAN, and the radio state information of the UTRAN. A process of generating the concurrency policy may be based on the following distribution algorithm:

For user-level radio link quality, when the link quality is good, the data amount carried on the link may be increased, that is, a load sharing proportion of a radio access network where the link is located is increased. When the link quality is poor, the data amount carried on the link may be reduced, that is, the load sharing proportion of the radio access network where the link is located is lowered. Through the adaptive procedure, a resource utilization rate of the air interface may be improved.

For the air interface load of a cell(hot-spot)-level radio access network, when the air interface load of the radio access network is high, the data amount carried on the radio access network may be reduced, that is, the load sharing proportion of the radio access network is lowered. When the network load is low, the data amount carried on the radio access network may be increased, that is, the load sharing proportion of the radio access network where the link is located is increased. Through the adaptive procedure, the network load can be balanced.

Impacts of the connection state on distribution: after a certain connection is broken, the user equipment may report the situation to the master control node, and the master control node re-calculates a distribution proportion, here, the proportion distribution does not consider the connection; after a certain connection is restored, the user equipment reports the situation to the master control node, and the master control node recalculates the distribution proportion, here, the proportion distribute needs to consider the data connection.

430: The RNC sends the concurrency, policy to the user equipment.

The master control node in the RNC may send the concurrency, policy to the user equipment by using the first data connection established in 410. In order to prevent the standard signaling from being changed, the master control node in the RNC may fill in the coordination signaling with the concurrency, policy, encapsulate the coordination signaling in a UDP/IP data packet, and send the UDP/IP data packet to the user equipment by carrying the UDP/IP data packet on the first data connection.

435: The user equipment receives the concurrency policy, and selects a radio access network satisfying the concurrency, policy.

A TCP/IP protocol stack in the user equipment may deliver the received coordination signaling to an executing node according to a preset UDP port, the executing node listens on the UDP port, and after the UDP port receives the coordination signaling, the executing node selects the radio access network satisfying the concurrency policy according to the concurrency policy, and enables a data transmission module corresponding to the radio access network. The concurrency policy only includes a load proportion to be carried on each radio access network, for example, the concurrency policy indicates that a proportion of data streams transmitted by the WLAN, the UTRAN, and the E-UTRAN is 2:1:1.

440: The user equipment sends a second data stream to the AC/BRAS.

The user equipment may share, according to the concurrency, policy, a subsequently newly added data stream to an appropriate data connection, for example, in this embodiment, the newly added second data stream is distributed to a data transmission module of the WLAN, so as to implement uplink concurrency, thereby balancing an uplink network load.

445: The RNC transmits a downlink data stream to the user equipment.

The RNC may route, according to an uplink source IP address of the first data stream, the downlink data stream corresponding to the first data stream to the first data connection, as the first data connection already exists, re-establishing is not required, and the user equipment finally receives the downlink data on the data transmission module carrying the uplink data, so as to implement downlink concurrency, thereby balancing a downlink network load.

450: The AC/BRAS transmits the downlink data stream to the user equipment.

The AC/BRAS may route, according to an uplink source IP address of the second data stream, the downlink data stream corresponding to the second data stream to the second data connection, as the second data connection already exists, re-establishing is not required, and the user equipment finally receives the downlink data on the data transmission module carrying the uplink data, so as to implement downlink concurrency, thereby balancing a downlink network load.

455: The AC/BRAS sends new radio state information of the WLAN to the RNC.

458: The user equipment sends new radio state information to the RNC.

460: The eNodeB sends new radio state information of the E-UTRAN to the RNC.

465: The RNC generates a new concurrency policy according to the new radio state information.

470: The RNC sends the new concurrency policy to the user equipment through the first data connection.

455 to 470 are similar to 415 to 430, and details are not repeatedly described herein.

475: The user equipment selects, according to the new concurrency, policy, a radio access system used for transmitting a new third data stream.

For example, the user equipment selects, according to the new concurrency, policy, to transmit the new third data stream through the E-UTRAN. The user equipment may determine, according to the load proportion carried in the concurrency policy, the radio access network for transmitting the newly added data stream. Once a certain radio access network is determined, if the user equipment does not have a connection with the radio access network, the user equipment may first establish a connection with the radio access network, and then carry the data on the radio access network, and if the user equipment already establishes a connection with the radio access network, the user equipment directly uses the established connection to transmit the newly added data stream. The user equipment may determine, according to whether the radio access network distributes an IP address to the user equipment, a connection state with the radio access network. For example, if the user equipment finds that the radio access network distributes an IP address to the user equipment, it indicates that the connection with the radio access network is in the connected state, otherwise, it indicates that the connection with the radio access network is in the disconnected state.

480: The user equipment transmits the third data stream to the eNodeB.

The user equipment establishes a third data connection with the eNodeB, and transmits the third data stream through the third data connection.

485: The eNodeB transmits the downlink data stream to the user equipment.

For example, after receiving the downlink data stream corresponding to the third data stream transmitted by the core network, the eNodeB may transmit the downlink data stream to the user equipment on the third data connection.

The user equipment adjusts, according to the new concurrency policy, selection of the data connection for the subsequently newly added data stream, so as to adapt to the new radio state. In order to prevent the data stream from being interrupted, the existing data stream may not be affected by the new concurrency, policy, that is, the data stream of an existing service is still transmitted on an original data connection.

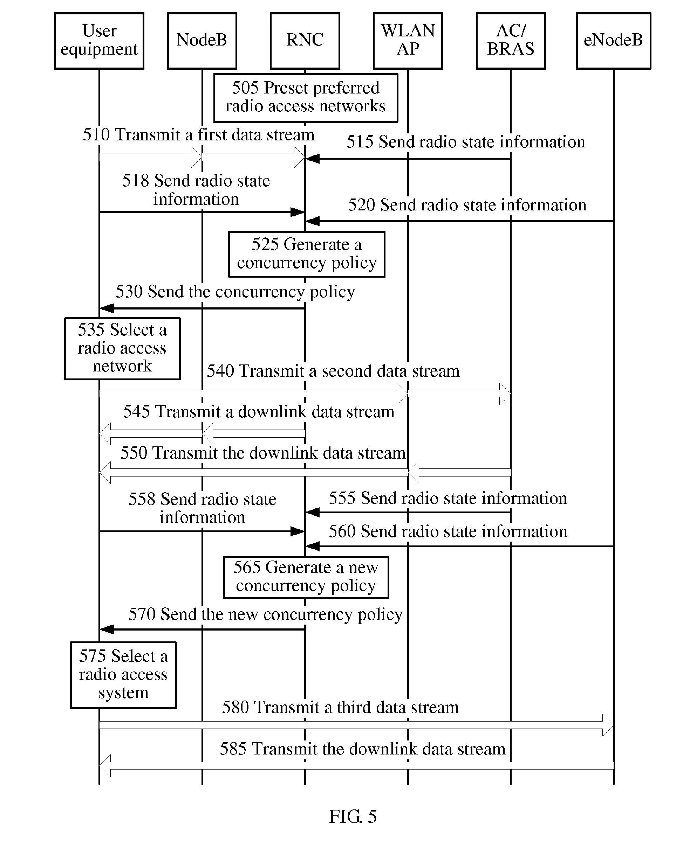

FIG. 5 is a schematic flowchart of a data transmission process according to another embodiment of the present invention. The embodiment of FIG. 5 describes an example of concurrently transmitting data based on a radio state of a radio access network and a data stream feature. In this embodiment, an RNC of an UTRAN is disposed with a master control node for concurrent transmission. 510 to 520 and 520 to 585 of FIG. 5 are similar to 410 to 420 and 445 to 485 of FIG. 4, and details are not repeatedly described herein.

505: Preset preferred radio access networks of different data streams in the RNC.

An operator may preset the preferred radio access networks of the different data streams, that is, preset mapping information indicating correspondence between a data stream type and a radio access network. In other words, for a specific application program feature, a preferred radio access network of the application program may be preset in the RNC, for example, the operator may set that a web page browser preferably uses a WLAN to transmit the data.

510: A user equipment transmits a first data stream through a master data transmission module.

515: An AC/BRAS sends radio state information of a WLAN to the RNC.

518: The user equipment sends radio state information to the RNC.

520: An eNodeB sends radio state information of an E-UTRAN to the RNC.

525: The RNC generates a concurrency policy according to the radio state information.

The RNC may generate the concurrency policy according to the radio state information of the WLAN, the radio state information of the E-UTRAN, and the radio state information of the UTRAN.

In addition, in this embodiment, the concurrency policy further carries the mapping information, used to indicate preferred access networks of different data streams.

530: The RNC sends the concurrency, policy to the user equipment.

535: The user equipment receives the concurrency policy, and selects a radio access network satisfying the concurrency, policy.

A TCP/IP protocol stack in the user equipment may deliver received coordination signaling to an executing node according to a preset UDP port, the executing node listens on the UDP port, and after the UDP port receives the coordination signaling, the executing node selects the radio access network satisfying the concurrency policy according to the concurrency policy, and enables a data transmission module corresponding to the radio access network. For example, for a data stream with a preferred access network, the preferred access network of the data stream is directly selected to transmit the data stream. For a data stream without a preferred access network, each access network is selected, according to a distribution proportion provided by the concurrency policy, for transmission, to transmit the data stream.

540: The user equipment sends a second data stream to the AC/BRAS.

The user equipment may share, according to the concurrency policy, a subsequently newly added data stream to an appropriate data connection, for example, in this embodiment, the newly added second data stream is distributed to a data transmission module of the WLAN, so as to implement uplink concurrency, thereby balancing an uplink network load.

545: The RNC transmits a downlink data stream to the user equipment.

550: The AC/BRAS transmits the downlink data stream to the user equipment.

555: The AC/BRAS sends new radio state information of the WLAN to the RNC.

558: The user equipment sends new radio state information to the RNC.

560: The eNodeB sends new radio state information of the E-UTRAN to the RNC.

565: The RNC generates a new concurrency policy according to the new radio state information.

570: The RNC sends the new concurrency policy to the user equipment through the first data connection.

575: The user equipment selects, according to the new concurrency, policy, a radio access system used for transmitting a new third data stream.

580: The user equipment transmits the third data stream to the eNodeB.

585: The eNodeB transmits the downlink data stream to the user equipment.

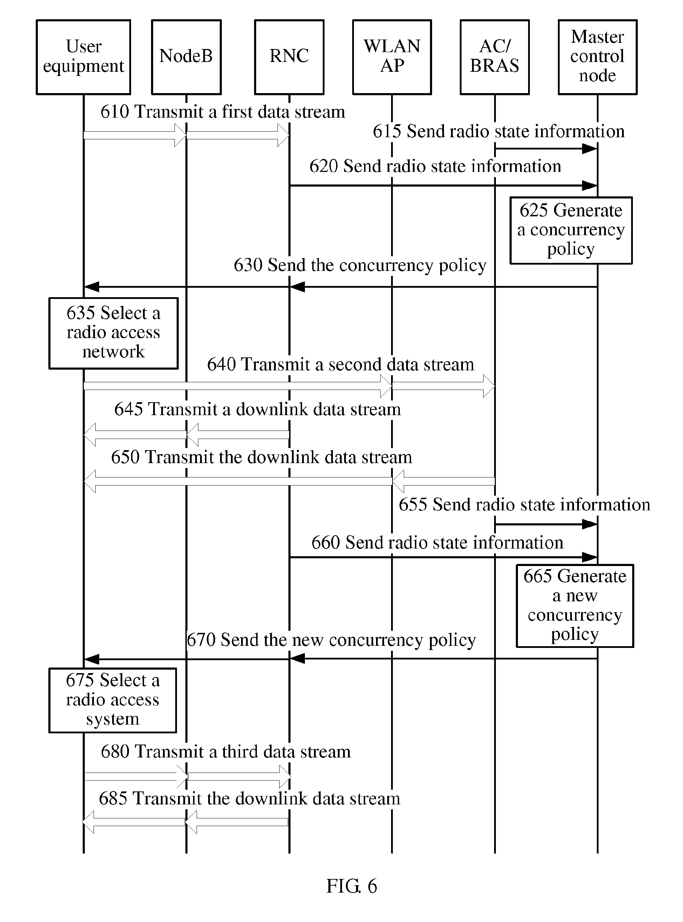

FIG. 6 is a schematic flowchart of a data transmission process according to yet another embodiment of the present invention. The embodiment of FIG. 6 describes an example of concurrently transmitting data based on a radio state of a radio access network. In this embodiment, a master control node for concurrent transmission is located on a network side device independent from the radio access network.

610: A user equipment transmits a first data stream through a master data transmission module.

The user equipment may first use the master data transmission module to establish a first data connection with a data transmission module of the network side device of the radio access network through a certain application program (for example, an instant communication application program), and transmits the first data stream on the first data connection. In this embodiment, the first data connection is established between the user equipment and an UTRAN.

615: An AC/BRAS sends radio state information of a WLAN to the master control node.

The AC/BRAS may report load state information (for example, an air interface load) of the WLAN to the master control node in the RNC through a data transmission module. Optionally, the user equipment may report a connection state of the WLAN to the master control node by carrying the connection state of the WLAN in coordination signaling through the first data connection.

620: The RNC sends radio state information of the UTRAN to the master control node.

The user equipment may report link quality of the UTRAN to the RNC through a normal feedback mechanism. The master control node may receive the radio state information, for example, the link quality, the air interface load, and the connection state of the UTRAN reported by the RNC. The RNC may report load state information (for example, the air interface load), the connection state, and the link quality of the UTRAN to the master control node in the RNC through a data transmission module of the RNC.

625: The master control node generates a concurrency policy according to the radio state information.

The master control node may generate the concurrency policy according to the radio state information of the WLAN and the radio state information of the UTRAN.

630: The master control node sends the concurrency policy to the user equipment.

The master control node may send the concurrency policy to the user equipment by using the first data connection established in 610. In order to prevent the standard signaling from being changed, the master control node may fill in the coordination signaling with the concurrency, policy, encapsulate the coordination signaling in a UDP/IP data packet, and send the UDP/IP data packet to the user equipment by carrying the UDP/IP data packet on the first data connection. In other words, the master control node first sends the concurrency policy to the RNC, and the RNC sends the concurrency, policy to the user equipment through the first data connection.

635: The user equipment receives the concurrency policy, and selects a radio access network satisfying the concurrency, policy.

A TCP/IP protocol stack in the user equipment may deliver the received coordination signaling to an executing node according to a preset UDP port, the executing node listens on the UDP port, and after the UDP port receives the coordination signaling, the executing node selects the radio access network satisfying the concurrency, policy according to the concurrency policy, and enables a data transmission module corresponding to the radio access network.

640: The user equipment sends a second data stream to the AC/BRAS.

The user equipment may share, according to the concurrency, policy, a subsequently newly added data stream to an appropriate data connection, for example, in this embodiment, the newly added second data stream is distributed to a data transmission module of the WLAN, so as to implement uplink concurrency, thereby balancing an uplink network load. The user equipment sends the data to the AC/BRAS through a WLAN AP, and the AC/BRAS sends the data to the Internet.

645: The RNC transmits a downlink data stream to the user equipment.

The RNC may route, according to an uplink source IP address of the first data stream, the downlink data stream corresponding to the first data stream to the first data connection, as the first data connection already exists, re-establishing is not required, and the user equipment finally receives the downlink data on the data transmission module carrying the uplink data, so as to implement downlink concurrency, thereby balancing a downlink network load.

650: The AC/BRAS transmits the downlink data stream to the user equipment.

The AC/BRAS may route, according to an uplink source IP address of the second data stream, the downlink data stream corresponding to the second data stream to the second data connection, as the second data connection already exists, re-establishing is not required, and the user equipment finally receives the downlink data on the data transmission module carrying the uplink data, so as to implement downlink concurrency, thereby balancing a downlink network load.

655: The AC/BRAS sends new radio state information of the WLAN to the master control node.

660: The RNC sends new radio state information of the UTRAN to the master control node.

665: The master control node generates a new concurrency policy according to the new radio state information.

670: The master control node sends the new concurrency policy to the user equipment through the first data connection.

675: The user equipment selects, according to the new concurrency, policy, a radio access system used for transmitting a new third data stream.

For example, the user equipment selects, according to the new concurrency, policy, the UTRAN to transmit the new third data stream.

680: The user equipment transmits the third data stream to the RNC.

The user equipment establishes a third data connection with the RNC, and transmits the third data stream through the third data connection.

685: The RNC transmits the downlink data stream to the user equipment.

For example, after receiving the downlink data stream corresponding to the third data stream transmitted by the core network, the RNC may transmit the downlink data stream to the user equipment on the third data connection.

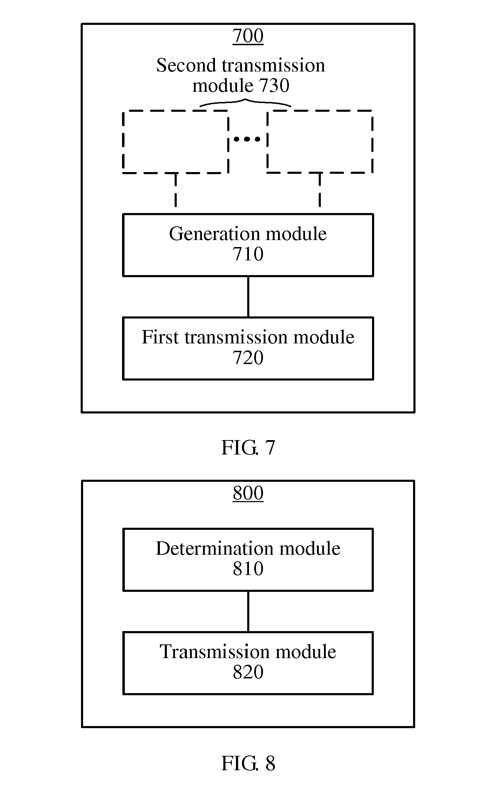

In the foregoing, the data transmission method according to the embodiment of the present invention is described, and in the following, the network side device and the user equipment according to the embodiments of the present invention are described in combination with FIG. 7 to FIG. 12, respectively.

FIG. 7 is a schematic structural diagram of a network side device 700 according to an embodiment of the present invention. The network side device 700 includes a generation module 710 and a first transmission module 720.

The generation module 710 is configured to generate a concurrency policy, where the concurrency policy is used to indicate a user equipment to select at least one access network from at least two access networks to transmit at least one data stream. The first transmission module 720 is configured to send the concurrency policy to the user equipment through a first data connection between a first access network in the at least two access networks and the user equipment.

According to the embodiment of the present invention, the user equipment may select, according to the concurrency policy generated by the network side, an appropriate access network from multiple access networks to concurrently transmit the data, so as to obtain a higher peak throughput, and improve user experience. In addition, in the embodiment of the present invention, a core network does not need to be reconstructed, so as to lower a reconstruction cost.

Optionally, as another embodiment, the network side device 700 further includes: at least two second transmission modules 730, configured to respectively obtain network state information of the at least two access networks from the at least two access networks, where the network state information includes information used to indicate a resource usage state of the access network, where the generation module 710 generates the concurrency, policy according to the network state information of the at least two access networks.

According to the embodiment of the present invention, the network state information includes: at least one of a network load and a connection state.

The at least two access networks include at least one radio access network, and the network state information includes: at least one of a network load, a connection state, and link quality, where the network load is an air interface load.

According to the embodiment of the present invention, the concurrency policy includes load sharing information used to indicate a load sharing proportion of the at least two access networks, so that the user equipment selects, according to the load sharing information, the at least one radio access network to transmit the at least one data stream.

Optionally, as another embodiment, the concurrency policy further includes: mapping information, so that the user equipment selects, according to the load sharing information and the mapping information, the at least one radio access network to transmit the at least one data stream, where the mapping information is used to indicate correspondence between the at least two access networks and different data stream features.

Optionally, as another embodiment, the concurrency policy includes: mapping information, so that the user equipment selects, according to the mapping information, the at least one access network corresponding to the at least one data stream to transmit the at least one data stream, where the mapping information is used to indicate correspondence between the at least two access networks and different data stream features.

Optionally, as another embodiment, the concurrency policy includes: identification information of the at least one access network, so that the user equipment selects, according to the identification information, the at least one access network to transmit the at least one data stream.

The network side device 700 is a network side device of the first access network, or the device 700 is a network side device of any access network in the at least two access networks, or the network side device is a network side device independent from the at least two access networks.

For operations and functions of the generation module 710 and the first transmission module 720 of the network side device 700, reference may be made to 110 and 120 of FIG. 1, and to avoid repetition, details are not repeatedly described herein.

FIG. 8 is a schematic structural diagram of a network side device 800 according to another embodiment of the present invention. The user equipment 800 includes a determination module 810 and a transmission module 820.

The determination module 810 determines network state information of a radio access network where the network side device is located. The transmission module sends the network state information to a master control node, so that the master control node generates a concurrency, policy according to the network state information, where the network state information includes information used to indicate a resource usage state of an access network, and the concurrency policy is used to indicate a user equipment to select at least one access network from at least two access networks to transmit at least one data stream, and transmit uplink data and downlink data through a data connection between the network side device and the user equipment.

According to the embodiment of the present invention, the user equipment may select, according to the concurrency policy generated by the network side, an appropriate access network from multiple access networks to concurrently transmit the data, so as to obtain a higher peak throughput, and improve user experience. In the embodiment of the present invention, the appropriate access network may be selected in time according to the network state information, so as to adjust load sharing of the user equipment in time. In addition, in the embodiment of the present invention, a core network does not need to be reconstructed, so as to lower a reconstruction cost.

For operations and functions of the determination module 810 and the transmission module 820 of the network side device 800, reference may be made to 310 and 320 of FIG. 2, and to avoid repetition, details are not repeatedly described herein.

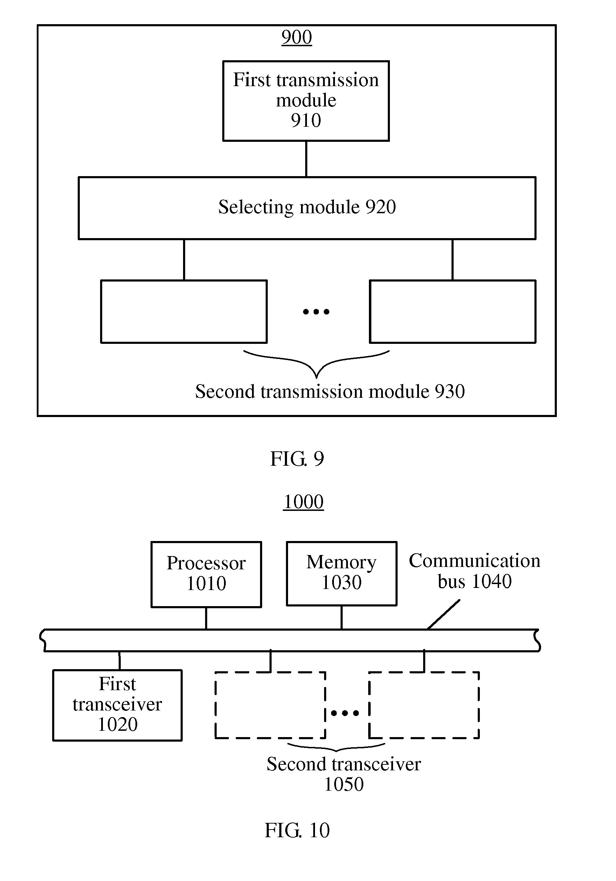

FIG. 9 is a schematic structural diagram of a user equipment 900 according to an embodiment of the present invention. The user equipment 900 includes a first transmission module 910, a selecting module 920, and at least one second transmission module 930.

The first transmission module 910 is configured to receive a concurrency policy from a network side device through a first data connection between a first access network in at least two access networks and the user equipment, where the concurrency, policy is used to indicate the user equipment to select at least one access network from the at least two access networks to transmit at least one data stream. The selecting module 920 is configured to select, according to the concurrency, policy, the at least one access network from the at least two access networks to transmit the at least one data stream. The at least one second transmission modules 930 is configured to transmit the at least one data stream through the at least one access network.

According to the embodiment of the present invention, the user equipment may select, according to the concurrency policy generated by the network side, an appropriate access network from multiple access networks to concurrently transmit the data, so as to obtain a higher peak throughput, and improve user experience. Further, the appropriate access network may be selected in time, so as to adjust load sharing of the user equipment in time. In addition, in the embodiment of the present invention, a core network does not need to be reconstructed, so as to lower a reconstruction cost.

According to the embodiment of the present invention, the concurrency policy is generated according to network state information of the at least two access networks, and the network state information includes information used to indicate a resource usage state of the access network.

According to the embodiment of the present invention, the at least two access networks include at least one radio access network, and the network state information includes: at least one of a network load and a connection state.

Optionally, as another embodiment, the at least two access networks include at least one radio access network, and the network state information includes: at least one of a network load, a connection state, and link quality, where the network load is an air interface load.

According to the embodiment of the present invention, the concurrency, policy includes: load sharing information used to indicate a load sharing proportion of the at least two access networks, where the selecting module 920 selects, according to the load sharing information, the at least one access network to transmit the at least one data stream.

Optionally, as another embodiment, the concurrency policy further includes: mapping information used to indicate correspondence between the at least two access networks and different data stream features, where the selecting module 920 selects, according to the load sharing information and the mapping information, the at least one radio access network to transmit the at least one data stream.

According to the embodiment of the present invention, the concurrency policy includes: mapping information used to indicate correspondence between the at least two access networks and different data stream features, where the selecting module 920 selects, according to the mapping information, the at least one access network to transmit the at least one data stream.

According to the embodiment of the present invention, the data stream feature includes at least one of a target address, a source address, a target port number, a source port number, and a protocol number.

According to the embodiment of the present invention, the concurrency policy includes: identification information of the at least one access network, where the selecting module 920 selects, according to the identification information, the at least one access network to transmit the at least one data stream.

Optionally, as another embodiment, the first transmission module 910 is further configured to receive a downlink data stream of the first access network from the first access network through the first data connection of the first access network; and the at least one second transmission module 930 is further configured to receive a downlink data stream of the at least one access network through a data connection between the at least one access network and the user equipment.

Optionally, as another embodiment, the at least one second transmission module is further configured to: after the at least one access network is selected to transmit the at least one data stream, respectively establish at least one data connection with the at least one access network in a case that the at least one access network does not establish a data connection with the user equipment.

For operations and functions of the first transmission module 910, the selecting module 920, and the at least one second transmission module 930 of the user equipment 900, reference may be made to 310, 220, and 330 of FIG. 3, and to avoid repetition, details are not repeatedly described herein.

FIG. 10 is a schematic structural diagram of a network side device 1000 according to another embodiment of the present invention. The network side device 1000 includes a processor 1010, a first transceiver 1020, a memory 1030, and a communication bus 1040.

The processor 1010 invokes information stored in the memory 1030 through the communication bus 1040, to generate a concurrency policy, where the concurrency policy is used to indicate a user equipment to select at least one access network from at least two access networks to transmit at least one data stream. The first transceiver 1020 is configured to send the concurrency policy to the user equipment through a first data connection between a first access network in the at least two access networks and the user equipment.

According to the embodiment of the present invention, the user equipment may select, according to the concurrency policy generated by the network side, an appropriate access network from multiple access networks to concurrently transmit the data, so as to obtain a higher peak throughput, and improve user experience. In addition, in the embodiment of the present invention, a core network does not need to be reconstructed, so as to lower a reconstruction cost.

Optionally, as another embodiment, at least two second transceivers 1050 are further configured to respectively obtain network state information of the at least two access networks from the at least two access networks, where the network state information includes information used to indicate a resource usage state of the access network, where the processor 1010 generates the concurrency, policy according to the network state information of the at least two access networks.

According to the embodiment of the present invention, the network state information includes: at least one of a network load and a connection state.

According to the embodiment of the present invention, the at least two access networks include at least one radio access network, and the network state information includes: at least one of a network load, a connection state, and link quality, where the network load is an air interface load.

According to the embodiment of the present invention, the concurrency policy includes load sharing information used to indicate a load sharing proportion of the at least two access networks, so that the user equipment selects, according to the load sharing information, the at least one radio access network to transmit the at least one data stream.

Optionally, as another embodiment, the concurrency policy further includes: mapping information, so that the user equipment selects, according to the load sharing information and the mapping information, the at least one radio access network to transmit the at least one data stream, where the mapping information is used to indicate correspondence between the at least two access networks and different data stream features.

Optionally, as another embodiment, the concurrency policy includes: mapping information, so that the user equipment selects, according to the mapping information, the at least one access network corresponding to the at least one data stream to transmit the at least one data stream, where the mapping information is used to indicate correspondence between the at least two access networks and different data stream features.

According to the embodiment of the present invention, the data stream feature includes at least one of a target address, a source address, a target port number, a source port number, and a protocol number.

Optionally, as another embodiment, the concurrency policy includes: identification information of the at least one access network, so that the user equipment selects, according to the identification information, the at least one access network to transmit the at least one data stream.

The network side device 1000 is a network side device of the first access network, or the device 1000 is a network side device of any access network in the at least two access networks, or the network side device is a network side device independent from the at least two access networks.

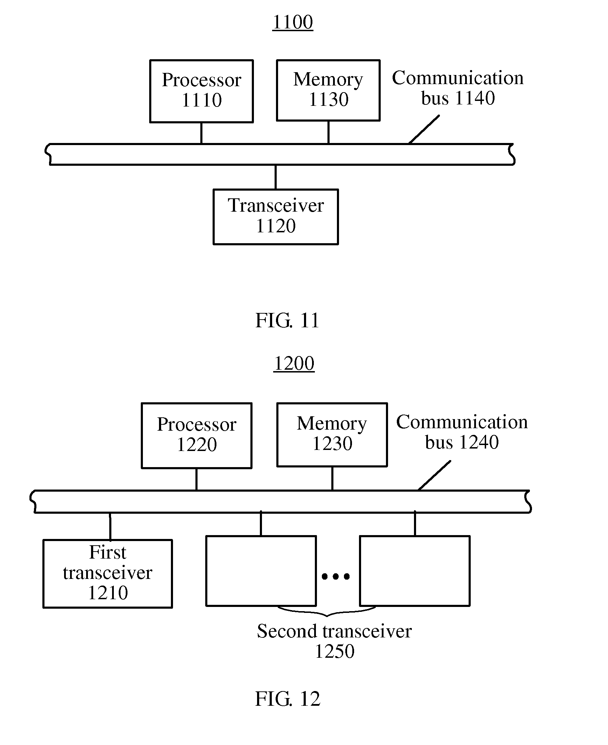

FIG. 11 is a schematic structural diagram of a network side device 1100 according to yet another embodiment of the present invention. The user equipment 1100 includes: a processor 1110, a transceiver 1120, a memory 1130, and a communication bus 1140.

The processor 1110 and the processor 1120 invoke information stored in the memory 1130 through the communication bus 1140, to determine network state information of a radio access network where the network side device is located. The transceiver 1120 sends the network state information to a master control node, so that the master control node generates a concurrency policy according to the network state information, and transmits uplink data and downlink data through a data connection between the network side device and the user equipment, where the network state information includes information used to indicate a resource usage state of an access network, and the concurrency policy is used to indicate a user equipment to select at least one access network from at least two access networks to transmit at least one data stream.

According to the embodiment of the present invention, the user equipment may select, according to the concurrency policy generated by the network side, an appropriate access network from multiple access networks to concurrently transmit the data, so as to obtain a higher peak throughput, and improve user experience. In the embodiment of the present invention, the appropriate access network may be selected in time according to the network state information, so as to adjust load sharing of the user equipment in time. In addition, in the embodiment of the present invention, a core network does not need to be reconstructed, so as to lower a reconstruction cost.

FIG. 12 is a schematic structural diagram of a user equipment 1200 according to another embodiment of the present invention. The user equipment 1200 includes a first transceiver 1210, a processor 1220, a memory 1230, a communication bus 1240, and at least one second transceiver 1250.

The first transceiver 1210 is configured to receive a concurrency, policy from a network side device through a first data connection between a first access network in at least two access networks and the user equipment, where the concurrency, policy is used to indicate the user equipment to select at least one access network from the at least two access networks to transmit at least one data stream. The processor 1220 invokes information stored in the memory 1230 through the communication bus 1240, to select, according to the concurrency policy, the at least one access network from the at least two access networks to transmit the at least one data stream. The at least one second transceiver 1250 is configured to transmit the at least one data stream through the at least one access network.

According to the embodiment of the present invention, the user equipment may select, according to the concurrency policy generated by the network side, an appropriate access network from multiple access networks to concurrently transmit the data, so as to obtain a higher peak throughput, and improve user experience. In addition, in the embodiment of the present invention, a core network does not need to be reconstructed, so as to lower a reconstruction cost.

According to the embodiment of the present invention, the concurrency policy is generated according to network state information of the at least two access networks, and the network state information includes information used to indicate a resource usage state of the access network.

According to the embodiment of the present invention, the at least two access networks include at least one radio access network, and the network state information includes: at least one of a network load and a connection state.

Optionally, as another embodiment, the at least two access networks include at least one radio access network, and the network state information includes: at least one of a network load, a connection state, and link quality, where the network load is an air interface load.

According to the embodiment of the present invention, the concurrency, policy includes: load sharing information used to indicate a load sharing proportion of the at least two access networks, where the processor 1220 selects, according to the load sharing information, the at least one access network to transmit the at least one data stream.

Optionally, as another embodiment, the concurrency policy further includes: mapping information used to indicate correspondence between the at least two access networks and different data stream features, where the processor 1220 selects, according to the load sharing information and the mapping information, the at least one radio access network to transmit the at least one data stream.

According to the embodiment of the present invention, the concurrency policy includes: mapping information used to indicate correspondence between the at least two access networks and different data stream features, where the processor 1220 selects, according to the mapping information, the at least one access network to transmit the at least one data stream.

According to the embodiment of the present invention, the data stream feature includes at least one of a target address, a source address, a target port number, a source port number, and a protocol number.

According to the embodiment of the present invention, the concurrency policy includes: identification information of the at least one access network, where the processor 1220 selects, according to the identification information, the at least one access network to transmit the at least one data stream.

Optionally, as another embodiment, the first transceiver 1210 is further configured to receive a downlink data stream of the first access network from the first access network through the first data connection of the first access network; and the at least one second transceiver 1250 is configured to respectively receive a downlink data stream of the at least one access network through a data connection between the at least one access network and the user equipment.

Optionally, as another embodiment, the at least one second transceiver 1250 is further configured to: after the at least one access network is selected to transmit the at least one data stream, respectively establish at least one data connection with the at least one access network in a case that the at least one access network does not establish a data connection with the user equipment.

A person of ordinary skill in the art may be aware that, units and algorithm steps of each example described in combination with the embodiments disclosed herein can be implemented by electronic hardware, or a combination of computer software and electronic hardware. Whether the functions are performed in a hardware or software manner depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that, for the purpose of convenient and brief description, for a detailed working process of the foregoing system, apparatus, and unit, reference may be made to the corresponding process in the foregoing method embodiments, and details are not repeatedly described herein.

In the several embodiments provided in the present invention, it should be understood that the disclosed system, apparatus, and method may be implemented in other manners. For example, the described apparatus embodiment is merely exemplary. For example, dividing of the units is merely a type of logical function dividing, and there may be other dividing manners during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the function is implemented in a form of a software functional unit and sold or used as an independent product, the function may be stored in a computer-readable storage medium. Based on such understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device, or the like) or a processor (processor) to perform all or a part of the steps of the methods described in the embodiments of the present invention. The foregoing storage medium includes: any medium that can store program code, such as a USB flash drive, a mobile hard disk, a read-only memory (Read-Only Memory, ROM), a random access memory (Random Access Memory, RAM), a magnetic disk, or an optical disc.

The foregoing description is merely specific implementation manners of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
generating a concurrency policy, wherein the concurrency policy is used to indicate a user equipment to select at least one access network from at least two access networks to transmit at least one data stream; and
sending the concurrency policy to the user equipment through a first data connection between a first access network in the at least two access networks and the user equipment.

2. The method according to claim 1, further comprising:
respectively obtaining network state information of the at least two access networks from the at least two access networks, wherein the network state information comprises information used to indicate a resource usage state of the access network,
wherein the generating a concurrency, policy comprises:
generating the concurrency policy according to the network state information of the at least two access networks.

3. The method according to claim 2, wherein the network state information comprises: at least one of a network load and a connection state.

4. The method according to claim 2, wherein the at least two access networks comprise at least one radio access network, and the network state information comprises: at least one of a network load, a connection state, and link quality, wherein the network load is an air interface load.

5. The method according to any one of claims 2 to 4, wherein the concurrency policy comprises load sharing information used to indicate a load sharing proportion of the at least two access networks, so that the user equipment selects, according to the load sharing information, the at least one radio access network to transmit the at least one data stream.

6. The method according to claim 5, wherein the concurrency, policy further comprises:
mapping information, so that the user equipment selects, according to the load sharing information and the mapping information, the at least one radio access network to transmit the at least one data stream, wherein the mapping information is used to indicate correspondence between the at least two access networks and different data stream features.

7. The method according to claim 1, wherein the concurrency policy comprises: mapping information, so that the user equipment selects, according to the mapping information, the at least one access network corresponding to the at least one data stream to transmit the at least one data stream, wherein the mapping information is used to indicate correspondence between the at least two access networks and different data stream features.

8. The method according to claim 6 or 7, wherein the data stream feature comprises at least one of a target address, a source address, a target port number, a source port number, and a protocol number.

9. The method according to claim 1, wherein the concurrency policy comprises: identification information of the at least one access network, so that the user equipment selects, according to the identification information, the at least one access network to transmit the at least one data stream.

10. A data transmission method, comprising:
determining, by a network side device, network state information of a radio access network where the network side device is located;
sending, by the network side device, the network state information to a master control node, so that the master control node generates a concurrency policy according to the network state information, wherein the network state information comprises information used to indicate a resource usage state of an access network, and the concurrency policy is used to indicate a user equipment to select at least one access network from at least two access networks to transmit at least one data stream; and
transmitting, by the network side device, uplink data and downlink data through a data connection between the network side device and the user equipment.

11. A data transmission method, comprising:
receiving, by a user equipment, a concurrency, policy from a network side device through a first data connection between a first access network in at least two access networks and the user equipment, wherein the concurrency policy is used to indicate the user equipment to select at least one access network from the at least two access networks to transmit at least one data stream;
selecting, by the user equipment, according to the concurrency policy, the at least one access network from the at least two access networks to transmit the at least one data stream; and
transmitting, by the user equipment, the at least one data stream through the at least one access network.

12. The method according to claim 11, wherein the concurrency policy is generated according to network state information of the at least two access networks, and the network state information comprises information used to indicate a resource usage state of the access network.

13. The method according to claim 12, wherein the at least two access networks comprise at least one radio access network, and the network state information comprises: at least one of a network load and a connection state.

14. The method according to claim 12, wherein the at least two access networks comprise at least one radio access network, and the network state information comprises: at least one of a network load, a connection state, and link quality, wherein the network load is an air interface load.

15. The method according to any one of claims 12 to 14, wherein the concurrency policy comprises: load sharing information used to indicate a load sharing proportion of the at least two access networks,
wherein the selecting, by the user equipment, according to the concurrency policy, the at least one access network from the at least two access networks to transmit the at least one data stream comprises:
selecting, by the user equipment, according to the load sharing information, the at least one access network to transmit the at least one data stream.

16. The method according to claim 15, wherein the concurrency policy further comprises:
mapping information used to indicate correspondence between the at least two access networks and different data stream features,
wherein the selecting, by the user equipment, according to the concurrency policy, the at least one access network from the at least two access networks to transmit the at least one data stream comprises:
selecting, by the user equipment, according to the load sharing information and the mapping information, the at least one access network to transmit the at least one data stream.

17. The method according to claim 11, wherein the concurrency policy comprises: mapping information used to indicate correspondence between the at least two access networks and different data stream features,
wherein the selecting, by the user equipment, according to the concurrency policy, the at least one access network from the at least two access networks to transmit the at least one data stream comprises:
selecting, by the user equipment, according to the mapping information, the at least one access network to transmit the at least one data stream.

18. The method according to claim 11, wherein the concurrency policy comprises:
identification information of the at least one access network,
wherein the selecting, by the user equipment, according to the concurrency policy, the at least one access network from the at least two access networks to transmit the at least one data stream comprises:
selecting, by the user equipment, according to the identification information, the at least one access network to transmit the at least one data stream.

19. The method according to claim 17 or 18, wherein the data stream feature comprises at least one of a target address, a source address, a target port number, a source port number, and a protocol number.

20. The method according to any one of claims 11 to 19, further comprising:
receiving, by the user equipment, a downlink data stream of the first access network from the first access network through the first data connection of the first access network; and/or
receiving, by the user equipment, a downlink data stream of the at least one access network through a data connection between the at least one access network and the user equipment.

21. The method according to claim 11, further comprising:
after selecting the at least one access network to transmit the at least one data stream, establishing at least one data connection with the at least one access network in a case that the at least one access network does not establish a data connection with the user equipment.

22. A network side device, comprising:
a generation module, configured to generate a concurrency policy, wherein the concurrency policy is used to indicate a user equipment to select at least one access network from at least two access networks to transmit at least one data stream; and
a first transmission module, configured to send the concurrency, policy to the user equipment through a first data connection between a first access network in the at least two access networks and the user equipment.

23. The network side device according to claim 22, further comprising: at least two second transmission modules, configured to respectively obtain network state information of the at least two access networks from the at least two access networks, wherein the network state information comprises information used to indicate a resource usage state of the access network, wherein the generation module generates the concurrency policy according to the network state information of the at least two access networks.

24. The network side device according to claim 23, wherein the network state information comprises: at least one of a network load and a connection state.

25. The network side device according to claim 23, wherein the at least two access networks comprise at least one radio access network, and the network state information comprises: at least one of a network load, a connection state, and link quality, wherein the network load is an air interface load.

26. The network side device according to any one of claims 23 to 25, wherein the concurrency policy comprises load sharing information used to indicate a load sharing proportion of the at least two access networks, so that the user equipment selects, according to the load sharing information, the at least one radio access network to transmit the at least one data stream.

27. The network side device according to claim 26, wherein the concurrency policy further comprises: mapping information, so that the user equipment selects, according to the load sharing information and the mapping information, the at least one radio access network to transmit the at least one data stream, wherein the mapping information is used to indicate correspondence between the at least two access networks and different data stream features.

28. The network side device according to claim 22, wherein the concurrency, policy comprises:
mapping information, so that the user equipment selects, according to the mapping information, the at least one access network corresponding to the at least one data stream to transmit the at least one data stream, wherein the mapping information is used to indicate correspondence between the at least two access networks and different data stream features.

29. The network side device according to claim 22, wherein the concurrency policy comprises:
identification information of the at least one access network, so that the user equipment selects, according to the identification information, the at least one access network to transmit the at least one data stream.

30. The network side device according to claim 28 or 29, wherein the data stream feature comprises at least one of a target address, a source address, a target port number, a source port number, and a protocol number.

31. The network side device according to any one of claims 22 to 30, wherein the network side device is a network side device of the first access network, or the network side device is a network side device of any access network in the at least two access networks, or the network side device is a network side device independent from the at least two access networks.

32. A network side device, comprising:
a determination module, configured to determine network state information of a radio access network where the network side device is located; and
a transmission module, configured to send the network state information to a master control node, so that the master control node generates a concurrency policy according to the network state information, and transmit uplink data and downlink data through a data connection between the network side device and the user equipment, wherein the network state information comprises information used to indicate a resource usage state of an access network, and the concurrency policy is used to indicate a user equipment to select at least one access network from at least two access networks to transmit at least one data stream.

33. A user equipment, comprising:
a first transmission module, configured to receive a concurrency policy from a network side device through a first data connection existing between a first access network in at least two access networks and the user equipment, wherein the concurrency policy is used to indicate the user equipment to select at least one access network from the at least two access networks to transmit at least one data stream;
a selecting module, configured to select, according to the concurrency policy, the at least one access network from the at least two access networks to transmit the at least one data stream; and
at least one second transmission module, configured to transmit the at least one data stream through the at least one access network.

34. The user equipment according to claim 33, wherein the concurrency policy is generated according to network state information of the at least two access networks, and the network state information comprises information used to indicate a resource usage state of the access network.

35. The user equipment according to claim 34, wherein the at least two access networks comprise at least one radio access network, and the network state information comprises: at least one of a network load and a connection state.

36. The user equipment according to claim 35, wherein the at least two access networks comprise at least one radio access network, and the network state information comprises: at least one of a network load, a connection state, and link quality, wherein the network load is an air interface load.

37. The user equipment according to any one of claims 33 to 36, wherein the concurrency policy comprises: load sharing information used to indicate a load sharing proportion of the at least two access networks, wherein the selecting module selects, according to the load sharing information, the at least one access network to transmit the at least one data stream.

38. The user equipment according to claim 37, wherein the concurrency, policy further comprises: mapping information used to indicate correspondence between the at least two access networks and different data stream features, wherein the selecting module selects, according to the load sharing information and the mapping information, the at least one access network to transmit the at least one data stream.

39. The user equipment according to claim 33, wherein the concurrency policy comprises:
mapping information used to indicate correspondence between the at least two access networks and different data stream features, wherein the selecting module selects, according to the mapping information, the at least one access network to transmit the at least one data stream.

40. The user equipment according to claim 38 or 39, wherein the data stream feature comprises at least one of a target address, a source address, a target port number, a source port number, and a protocol number.

41. The user equipment according to claim 33, wherein the concurrency policy comprises:
identification information of the at least one access network, wherein the selecting module selects, according to the identification information, the at least one access network to transmit the at least one data stream.

42. The user equipment according to any one of claims 33 to 41, wherein
the first transmission module is further configured to receive a downlink data stream of the first access network from the first access network through the first data connection of the first access network; and
the at least one second transmission module is further configured to receive a downlink data stream of the at least one access network through a data connection between the at least one access network and the user equipment.

43. The user equipment according to claim 33, wherein the at least one second transmission module is further configured to: after the at least one access network is selected to transmit the at least one data stream, respectively establish at least one data connection with the at least one access network in a case that the at least one access network does not establish a data connection with the user equipment.
